# EUROPÄISCHE PATENTSCHRIFT

(11) **EP 2 144 829 B1**
(45) Veröffentlichungstag und Bekanntmachung des Hinweises auf die Patenterteilung: **01.08.2012**
(21) Anmeldenummer: 08715662.6
(22) Anmeldetag: 28.01.2008
(51) Int. Cl.: B65G 19/24

(54) **MITNEHMER FÜR KETTENFÖRDERER, INSBESONDERE ZUR BEFESTIGUNG VON KRATZEISEN**
DRIVER FOR CHAIN CONVEYORS, PARTICULARLY FOR FASTENING SCRAPERS
ENTRAÎNEUR POUR CONVOYEUR À CHAÎNE, NOTAMMENT POUR FIXER UN FER DE RACLETTE

(30) Priorität: 09.05.2007 DE 102007022278
(43) Veröffentlichungstag der Anmeldung: 20.01.2010
(73) Patentinhaber: RUD Ketten Rieger & Dietz GmbH u. Co. KG, 73432 Aalen (DE)
(72) Erfinder: NUDING, Andreas, 73312 Geislingen an der Steige (DE); GASSMANN, Klaus, 73432 Aalen-Unterkochen (DE)
(74) Vertreter: Grünecker, Kinkeldey, Stockmair & Schwanhäusser
(86) Internationale Anmeldenummer: PCT/EP2008/000635
(87) Internationale Veröffentlichungsnummer: WO 2008/138411

(56) Entgegenhaltungen:
- DE-A1- 1 481 350
- DE-A1- 2 925 046
- DE-U1- 29 810 777

## Beschreibung

Die Erfindung betrifft einen Mitnehmer für eine in einer Kettenrichtung bewegte Gliederkette insbesondere eines Kettenförderers, mit einem in den lichten Innenraum eines Kettengliedes der Gliederkette einführbar ausgestalteten Mitnehmerhorn und einem sich in Kettenrichtung erstreckenden Grundkörper, von dem das Horn abgewinkelt abkragt, und der wenigstens eine im Wesentlichen parallel zur Richtung der Gliederkette verlaufende Auflage- und Verschiebefläche für einen weiteren Mitnehmer aufweist. Die Erfindung betrifft ferner ein Verfahren zum Montieren derartiger Mitnehmer an der Gliederkette, wobei die beiden Mitnehmer in zwei voneinander beabstandete Kettenglieder der Gliederkette eingeführt werden.

Derartige Mitnehmer sind beispielsweise aus der DE 198 26 760 C1 bekannt. Die in dieser Druckschrift beschriebenen Mitnehmer liegen aufeinander auf und umfassen die Längsschenkel zweier beabstandeter Kettenglieder gabelartig. Die beiden Mitnehmer sind über eine Schwenkachse miteinander verbunden, so dass sie scherenartig aneinander schwenkbar sind. Der Nachteil dieses Mitnehmers liegt zum einen in seiner komplizierten geometrischen Form, die seine Herstellung und Montage recht aufwändig gestalten. Außerdem ist der Mitnehmer aufgrund seiner Länge nur bedingt in der Lage, Krümmungen der Kette zu folgen.

In der DE 29 25 046 C2, die den Oberbegriff des Anspruchs 1 offenbart, ist eine Vielzahl von unterschiedlich ausgestalteten Mitnehmern beschrieben, die im Unterschied zur Mitnehmeranordnung der DE 198 26 760 C1 ein einzelnes Kettenglied der Gliederkette an seinen gegenüberliegenden, abgerundeten Schmalseiten umgreifen, indem sie in die an dieses Kettenglied grenzenden Kettenglieder eingeführt sind. Die Mitnehmer können dadurch den Bewegungen der Kette besser folgen. Eine Ausführungsform dieser Druckschrift zeigt zueinander schwenkbare Mitnehmer, die sich über Flansche gegenseitig abstützen. Diese Ausführungsform ist zwar einfach und sicher zu montieren, weist aber eine sehr komplizierte Geometrie auf.

Die Mitnehmeranordnung der DE 33 02 755 C1 umfasst zwei Mitnehmer, zwischen denen ein Förderorgan eines Kettenförderers unter Bildung eines verschraubten Stapels angeordnet ist. Die Mitnehmeranordnung der DE 196 08 290 C1 besteht aus zwei im Wesentlichen hornförmigen, in die Kettenglieder eingehakten Mitnehmern, die unabhängig voneinander direkt an einem Förderorgan verschraubt sind. Diese Anordnung ist insofern nachteilig, als ein Austausch des Förderorgans bei gespannter Gliederkette nicht oder nur schwer möglich ist.

Die DE 38 28 712 A1 offenbart eine Mitnehmeranordnung, die ein Gliederkettenglied außen umgreift.

Die Kettenkratzförderer der DE 33 01 685 A1 und der DE 35 43 349 A1 schließlich sind durch eine Mitnehmeranordnung so an der Kette befestigt, dass die Kettenglieder festgeklemmt sind.

Trotz der Vielzahl von bereits bekannten Ausführungsformen fehlt es an Mitnehmern, die bei höchster Festigkeit und Zuverlässigkeit einfache geometrische Formen aufweisen, einfach zu montieren sind und dem Verlauf des Kettenstranges auch über Umlenkrollen und Antriebsräder problemlos folgen können.

Der Erfindung liegt daher die Aufgabe zugrunde, einen Mitnehmer mit derartigen Eigenschaften zu schaffen.

Efindungsgemäß wird diese Aufgabe für einen Mitnehmer der eingangs genannten Art dadurch gelöst, dass die Auflage- und Verschiebefläche an ihrer zur Gliederkette hin gerichteten Seite von einem im Wesentlichen senkrecht zur Auflage- und Verschiebefläche vorspringenden Stützabschnitt des Grundkörpers wenigstens teilweise begrenzt ist.

Diese Lösung ist konstruktiv sehr einfach und ermöglicht es, dass bei aufeinander liegenden Mitnehmern das sich im Betrieb durch die Krafteinwirkung an den Mitnehmerhörnern ausbildende, die Mitnehmer aufspreizende Moment durch den Stützabschnitt abgestützt wird. So lässt sich die Festigkeit des Mitnehmers erheblich erhöhen, ohne dass sich sein geometrischer Aufbau verkompliziert und er den Bewegungen der Kette schwerer folgen kann. Die erfindungsgemäße Ausgestaltung ermöglicht es zudem, die Mitnehmer ohne Hinterschneidungen auszugestalten. Die Mitnehmer können somit auch im Gussverfahren hergestellt werden.

Die erfindungsgemäße Lösung kann durch weitere, jeweils für sich betrachtet vorteilhafte Ausgestaltungen weiter verbessert werden.

Um das Zusammenschieben der Mitnehmer in Kettenrichtung zu erleichtern, kann sich die Auflage- und Verschiebefläche im Wesentlichen parallel zu der von Mitnehmerhorn und Grundkörper aufgespannten Mitnehmerebene erstrecken. Die Auflage- und Verschiebefläche kann insbesondere parallel zu der Ebene des von den Mitnehmerhömem umfassten Kettenglieder verlaufen. Auch können sich bevorzugt in Kettenrichtung erstreckende Formschlusselemente vorgesehen sein, wobei insbesondere der Stützabschnitt ein solches Formschlusselement bilden und somit eine Doppelfunktion als mechanische Stütze und Führung erfüllen kann.

Um Material zu sparen, kann der Mitnehmer im Bereich der Auflage- und Verschiebefläche mit einer gegenüber einem Übergangsbereich zwischen Mitnehmerhorn und Grundkörper verringerten Wandstärke ausgebildet sein. Dies ist möglich, ohne die Festigkeit des Mitnehmers zu verringern, da die Belastungen senkrecht zur Auflagefläche im Betrieb üblicherweise gering sind.

Um die Wirkung des Stützabschnittes als Momentenstütze zu verbessern, kann dieser als eine sich in Kettenrichtung zum Mitnehmerhorn erstreckende Stütz- und Führungswand ausgebildet sein. In dieser Ausgestaltung erfüllt der Stützabschnitt eine Doppelfunktion als Momentenstütze und als formschlüssige Führung beim Zusammenschieben zweier aufeinander liegender Mitnehmer.

Die in Richtung zur Gliederkette hin gemessene Wanddicke der Stütz- und Führungswand kann in einer weiteren vorteilhaften Ausgestaltung zum Mitnehmerhorn hin zunehmen. Dieser Verlauf berücksichtigt die in die Stütz- und Führungswand durch den aufliegenden Mitnehmer eingeleiteten Spannungen aufgrund des im Betrieb erzeugten Spreizmoments. Außerdern ist bei einem relativ zur Kettenrichtung schrägen Verlauf sichergestellt, dass nach längerem Betrieb die aufeinanderliegenden Mitnehmer selbst bei starker Verschmutzung voneinander gelöst werden können. Die Stütz- und Führungswand kann sich in Kettenrichtung in etwa bis zur Mitte der Verschiebe- und Auflagefläche erstrecken.

In einer weiteren vorteilhaften Ausgestaltung kann die quer zur Kettenrichtung verlaufende Breite der Auflage- und Verschiebefläche in Kettenrichtung weg vom Mitnehmerhorn im Bereich des Stützabschnittes zunächst zu- und dann abnehmen, so dass der Breitenverlauf der Auflage- und Verschiebefläche an den Dickenverlauf der Stütz- und Führungswand angepasst ist. So ist eine kompakte Bauweise des Mitnehmers bei einfacher geometrischer Form möglich.

Um die exakte Positionierung zweier aufeinander liegender Mitnehmer in Kettenrichtung zu erleichtern, kann die Auflage- und Verschiebefläche an ihrem mitnehmerhomseitigen Ende von einer sich im Wesentlichen senkrecht von der Auflage- und Verschiebefläche weg erstreckenden, im Wesentlichen senkrecht zur Kettenrichtung verlaufenden Anschlagwand begrenzt sein. Insbesondere durch das Zusammenwirken von Stützabschnitt und Anschlagwand können zwei aufeinander liegende Mitnehmer auch unter schwierigen Bedingungen schnell und sicher richtig zueinander positioniert werden.

Ein verbesserter Kraftfluss vom Mitnehmerhorn zum Grundkörper kann dadurch erreicht werden, dass im Übergangsbereich von Mitnehmerhorn und Grundkörper die Anschlagwand und die Stützwand miteinander unter Bildung eines gegenüber dem Bereich der Auflage- und Verschiebefläche verdickten Homfußes miteinander verbunden sind. Ferner können am Homfuß die Anschlagwand und die Stützwand unter Bildung eines zur Auflage- und Verschiebefläche hin gerichteten, sich vom Mitnehmerhorn weg öffnenden Winkels ineinander übergehen. Der Winkel kann insbesondere größer als 90° sein, um zwei aufeinander liegende Mitnehmer auch nach längerem Betrieb, wenn sich in den Spalten Verschmutzungen und Korrosion festgesetzt haben, leichter lösen zu können.

In einer fertigungstechnisch einfachen Ausgestaltung kann vorgesehen sein, dass die Wandstärke im Bereich der Auflage- und Verschiebefläche des Mitnehmers in etwa halb so groß ist, wie die Dicke des Mitnehmerhorns in Richtung quer zur Kettenrichtung. Außerdem ergibt sich bei dieser Ausgestaltung eine kompakte Bauweise einer Mitnehmranordnung aus zwei aufeinander liegenden Mitnehmern, weil diese nicht über die Dicke des Mitnehmerhorns ragen.

Die Außenkontur des Mitnehmers in Richtung senkrecht zur Auflage- und Verschiebefläche kann im Wesentlichen L-förmig sein.

Eine geringe Torsionsbelastung des Mitnehmers in Richtung senkrecht zur Auflagefläche kann dadurch erreicht werden, dass bei an der Gliederkette angebrachtem Mitnehmer die Auflage- und Verschiebefläche in etwa auf Höhe der Mittellinie der Gliederkette liegt. So werden die vom Mitnehmerhorn aufgenommenen Kräfte gleichmäßig und zentriert in zwei aufeinander liegende Mitnehmer geleitet. Außerdem erlaubt diese Ausgestaltung die Verwendung zweier identischer Mitnehmer.

Ferner kann im Bereich der Auflagefläche wenigstens eine Öffnung, beispielsweise in Form einer Bohrung oder eines anderen Durchbruches, für ein Befestigungsmittel vorgesehen sein. Vorzugsweise erstreckt sich die Öffnung senkrecht zur Auflagefläche.

Eine Mitnehmeranordnung für einen Kettenförderer, wie sie insbesondere zur Befestigung von Kratzeisen geeignet ist, kann zwei an ihren Auflage- und Verschiebeflächen in Kettenrichtung verschieblich aufeinander liegende Mitnehmer nach einer der obigen Ausgestaltungen aufweisen.

Aufgrund der verschieblichen Anordnung können die Mitnehmer in die Gliederkette eingesetzt werden, auch wenn diese gespannt ist. Dieser erleichtert die Wartungs- und Reparaturarbeiten am Kettenförderer in erheblichem Maße.

Die Mitnehmeranordnung kann entsprechend an einem Kettenförderer mit einer Gliederkette angebracht sein, insbesondere, indem sie in zwei durch ein einzelnes Kettenglied beabstandete Kettenglieder eingeführt ist und das beabstandete Kettenglied außen umgreift. Durch die Mitnehmerhörner werden in Kettenrichtung wirkende Kräfte in das Förderorgan eingeleitet. Ein vom Förderorgan erzeugtes Kippmoment wird dagegen in Form zweier senkrecht zur Ebene des Mitnehmers wirkende Kräfte in diejenigen Kettenglieder eingeleitet, in welche die Mitnehmerhörner eingeführt sind. Dies führt zu einer günstigeren Belastung der Kette und vermeidet eine Biegebelastung des zwischenliegenden Kettenglieds durch das Kippmoment. Somit trägt der mehrteilige Mitnehmer, welcher sich auf mehreren Kettengliedern des Kettenstranges abstützt, eindeutig zur Momentenentkopplung des Kippmomentes, welches üblicherweise über das Förderorgan in ein Kettenglied eingeleitet wird, bei.

Die beiden Mitnehmer können durch Befestigungsmittel lösbar miteinander verbunden sein.

Im Folgenden ist die Erfindung mit Bezug auf die Zeichnungen anhand von konkreten Ausführungsformen beispielhaft beschrieben. Wie oben ausgeführt ist, können einzelne Merkmale der Ausführungsformen auch weggelassen werden, wenn es auf die mit diesem Merkmal verbundenen Vorteile bei einer konkreten Anwendung nicht ankommen sollte.

Es zeigen:
- Fig. 1: eine schematische Perspektivansicht von schräg oben auf eine an einer Glieder kette angebrachten erfindungsgemäßen Mitnehmeranordnung;
- Fig. 2: eine schematische Perspektivansicht von schräg unten auf die in Fig. 1 dargestellte Mitnehmeranordnung;
- Fig. 3: eine schematische Darstellung der Mitnehmeranordnung der Fig. 2 in einem Schnitt entlang der Ebene III;
- Fig. 4: eine schematische Draufsicht auf einen erfindungsgemäßen Mitnehmer; und
- Fig. 5: eine schematische Seitenansicht des Mitnehmers der Fig. 4 in einer Ansicht entlang des Pfeils V.

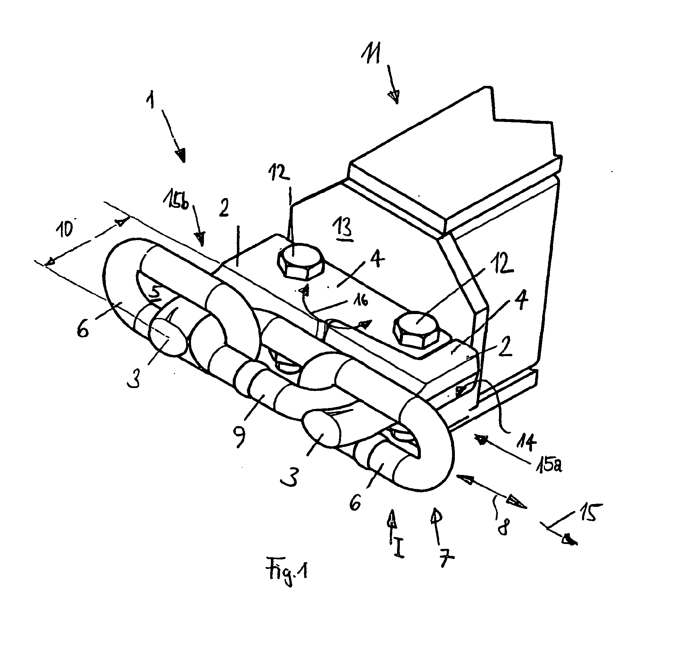

Zunächst wird der Aufbau einer erfindungsgemäßen Mitnehmeranordnung 1, die wenigstens zwei im Wesentlichen identisch ausgestaltete Mitnehmer 2 umfasst, mit Bezug auf die Fig. 1 beschrieben.

Jeder der Mitnehmer 2 weist ein Mitnehmerhorn 3 auf, das von einem Grundkörper 4 abkragt und in den lichten Innenraum 5 eines Kettengliedes 6 einer Gliederkette 7, beispielsweise einer Rundstahlkette eingeführt ist. Die Gliederkette 7 ist Teil eines nicht dar gestellten Kettenförderers.

Die beiden Mitnehmerhörner 3 der Mitnehmer 2 sind in einer Kettenrichtung 8, die sich in Längsrichtung der Gliederkette 7, vorzugsweise quer zu den Mitnehmerhörnern 3, erstreckt, voneinander so beabstandet, dass sie vorzugsweise ein einzelnes zwischen den Kettengliedern 6 angeordnetes Kettenglied 9 an dessen gebogener Schmalseite eng, aber mit Spiel, umgreifen. Die Länge des Mitnehmers 2 in Kettenrichtung 8 liegt in etwa zwischen dem Ein- und Zweifachen der Länge eines Kettengliedes 6.

Die Kraglänge 10, mit der das Mitnehmerhorn 3 vom Grundkörper 2 vorspringt, kann in etwa der äußeren Breite der Kettenglieder 6, 9 der Gliederkette 7 entsprechen, so dass die Mitnehmerhörner 3 an der vom Mitnehmer 2 abgewandten Seite innerhalb der Außenkontur der Gliederkette 7 liegen.

Über die Mitnehmeranordnung 1 ist ein Förderorgan 11, beispielsweise ein Kratzeisen, an der Gliederkette 7 befestigt, so dass es einer Bewegung der Gliederkette 7 in Kettenrichtung 8 folgen kann.

Wie der Fig. 1 ferner zu entnehmen ist, sind die beiden Mitnehmer durch Befestigungsmittel 12, beispielsweise eine Verschraubung, mit dem Förderorgan 11 verbunden. Eine der Gliederkette 7 zugewandte Fläche 13 des Förderorgans bildet dabei einen Anschlag für die rückwärtigen Flächen der Mitnehmeranordnung 1. Ferner liegt die Mitnehmeranordnung parallel zu der von den Mitnehmerhömern 3 aufgespannten Ebene auf einer Auflagefläche 14 des Förderorgans 11 auf.

Bei der Bewegung der Gliederkette 7 in einer Antriebsrichtung 15 entlang der Kettenrichtung 8 wird die Antriebskraft von der Gliederkette 7 über dasjenige Mitnehmerhorn 3 in die Mitnehmeranordnung 1 geleitet, das an dem in Antriebsrichtung 15 gelegenen Ende 15a der Mitnehmeranordnung 1 liegt. Das Mitnehmerhorn 3 am anderen Ende 15b nimmt nahezu keine Antriebskräfte auf. Über die Befestigungsmittel 12 wird die Antriebskraft von der Mitnehmeranordnung 1 in das Förderorgan 11 geleitet. Dieser Kraftfluss führt in der Mitnehmeranordnung 1 zu einem Spreizmoment 16, welches die beiden Mitnehmerhörner 3 voneinander weg zu spreizen versucht.

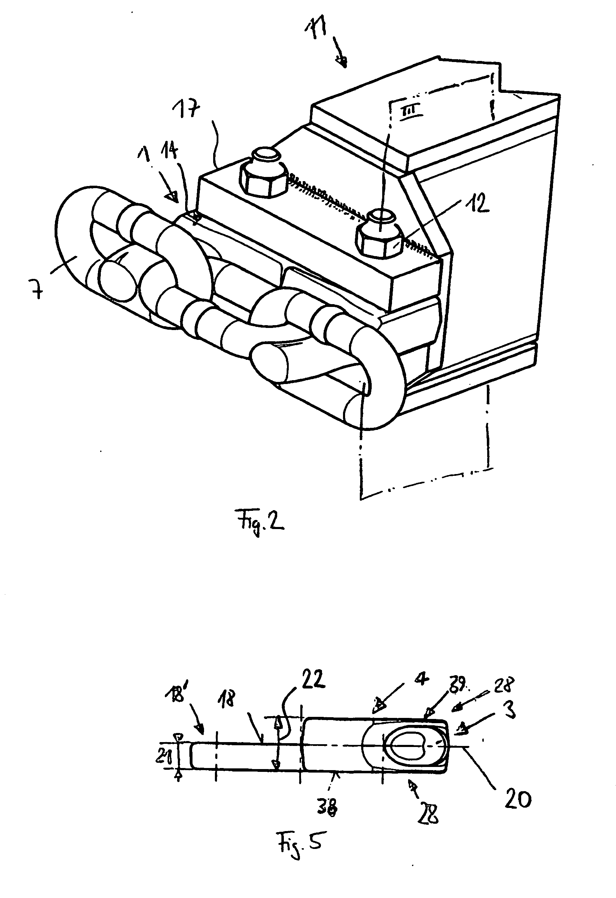

In Fig. 2 ist die Mitnehmeranordnung der Fig. 1 mitsamt Gliederkette 7 und Förderorgan 11 in einer Ansicht von unten entlang des Pfeils 1 dargestellt.

Wie zu erkennen ist, wird die Auflagefläche 14 von einem zur Mitnehmeranordnung 1 hin vorspringenden Auflageflansch 17 gebildet, der mit dem Förderorgan 11 beispielsweise verschweißt sein kann.

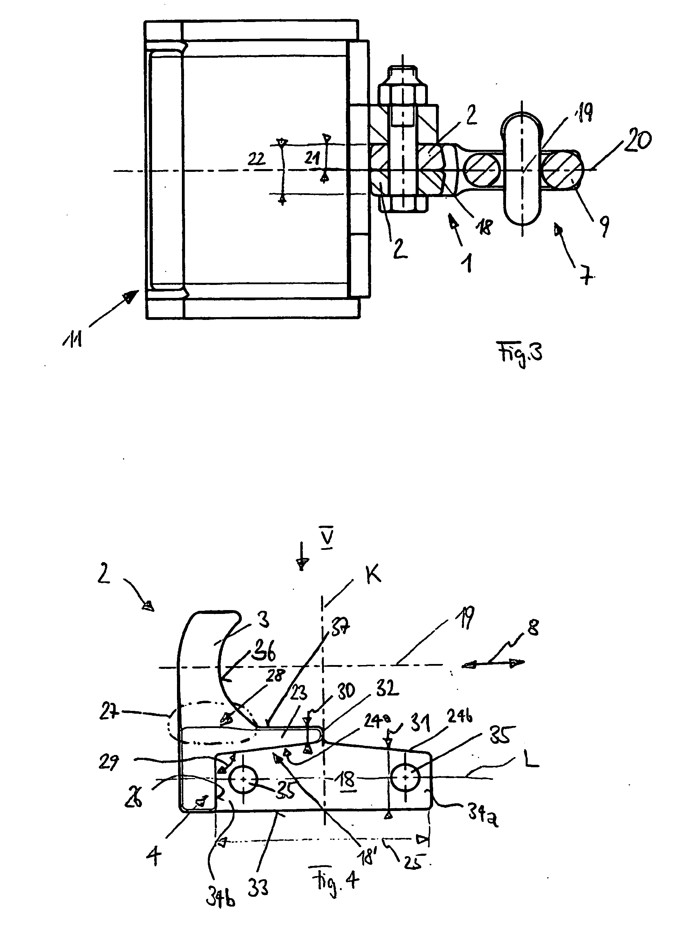

Fig. 3 zeigt einen Schnitt entlang der Ebene III durch das eine Befestigungsmittel 12 der Fig. 1.

Die beiden Mitnehmer 3 liegen entlang einer von beiden Mitnehmern 2 ausgebildeten Auflage- und Verschiebefläche 18 aufeinander. Die Auflage- und Verschiebefläche 18 kann insbesondere auf Höhe der Mittellinie 19 der Gliederkette 7 bzw. der Mitnahmehömer 3 verlaufen und insbesondere auf gleicher Höhe wie die Mittenebene 20 des von den Mitnehmerhörnern 3 umgriffenen Kettengliedes 9 liegen.

Wie ferner in Fig. 3 zu erkennen ist, kann im Bereich der Auflage- und Verschiebefläche 18 die Wandstärke 21 des Grundkörpers 2 die Hälfte der gesamten Wandstärke 22 der Mitnehmeranordnung 1 in diesem Bereich betragen. Die Wandstärke 22 ist kleiner als die Breite der Kettenglieder 6, 9.

Im Folgenden wird der Aufbau eines einzelnen Mitnehmers 2 zunächst mit Bezug auf die Fig. 4 erläutert, wobei für bereits beschriebene Elemente die Bezugszeichen der Figuren 1 bis 3 weiter verwendet werden.

Die Auflage- und Verschiebefläche 18 ist Teil des Grundkörpers 4 und kann insbesondere als eine plane, zu einer Seite hin in Kettenrichtung offene, unbegrenzte Fläche ausgebildet sein. An ihrer zur Gliederkette 7, die in Fig. 4 durch die Mittellinie 19 angedeutet ist, hin gerichteten Seite 18' ist die Auflage- und Verschiebefläche 18 von einem im Wesentlichen senkrecht zu ihr vorspringenden Stützabschnitt 23 wenigstens teilweise begrenzt. Der Stützabschnitt 23 kann insbesondere die Form einer sich in Kettenrichtung 8 zum Mitnehmerhorn 3 vorzugsweise geradlinig erstreckenden Stütz- und Führungswand 24a ausgebildet sein. In Richtung weg vom Mitnehmerhorn 3 endet die Stütz- und Führungswand 24a auf der halben sich in Kettenrichtung 8 erstreckenden Länge 25 der Auflage- und Verschiebefläche 18. Die Länge der Stütz- und Führungswand 24a beträgt in etwa die Hälfte oder das Einfache der Länge des lichten Innenraums der Gliederkette 7. Im von der Stütz- und Führungswand 24a nicht begrenzten Abschnitt 24b der zur Gliederkette 7 gewandten Seite ist die Auflage- und Verschiebefläche 18 offen.

In Kettenrichtung 8 zum Mitnehmerhorn 3 hin ist die Auflage- und Verschiebefläche 18 von einer Anschlagwand 26 begrenzt, die ebenfalls senkrecht zur Auflage- und Verschiebefläche 18 vorspringt und vorzugsweise quer zur Kettenrichtung 8 verläuft.

In einem Übergangsbereich 27 zwischen Mitnehmerhorn 3 und Grundkörper 4 ist die Dicke senkrecht zur Mittenebene 20 (vgl. Fig. 3) des Grundkörpers 4 größer, insbesondere doppelt so groß, als im Bereich der Auflagefläche 18. Ferner sind im Übergangsbereich 27 die Anschlagwand 26 und die Stütz- und Führungswand 24a miteinander unter Bildung eines gegenüber dem Bereich der Auflage- und Verschiebefläche verdickten Homfußes 28 miteinander verbunden. Dabei gehen die Anschlagwand 26 und die Stütz- und Führungswand 24a unter Bildung eines zur Auflage- und Verschiebefläche hin gerichteten, vom Mitnehmerhorn sich weg öffnenden Winkels 29 ineinander über. Der Winkel 29 ist in seiner Projektion in die Auflage- und Verschiebefläche bevorzugt größer als 90°, so dass im Betrieb sich die im Bereich der Stütz- und Führungswand 24a aneinander liegenden Mitnehmer 3 (vgl. Fig. 1) bei Verschmutzung leichter lösen lassen.

Die in Richtung quer zur Gliederkette 7 gemessene Wanddicke 30 der Stütz- und Führungswand 24a nimmt in Kettenrichtung zum Mitnehmerhorn 3 hin zu. Die in dieser Richtung gemessene Breite 31 der Auflage- und Verschiebefläche 18 nimmt dabei vom Mitnehmerhorn aus gesehen zunächst zu und dann, ab dem in Kettenrichtung 8 gelegenen Ende der Stütz- und Führungswand 32, in Kettenrichtung 8 wieder ab. Die Auflage- und Verschiebefläche 18 ist somit an ihrem vom Mitnehmerhorn abgewandten Ende zur Gliederkette 9 hin von einer eine Verschiebefläche 24b bildenden Seitenwand des Grundkörpers 4 begrenzt.

Die von der Gliederkette 7 abgewandte Rückenfläche 33 ist im Wesentlichen plan.

In der Nähe der beiden in Kettenrichtung 8 gelegenen Endabschnitte 34a, 34b der Auflage- und Verschiebefläche 18 ist jeweils eine Öffnung 35 für das Befestigungsmittel 12 (vgl. Fig. 1 bis 3) vorgesehen. Bei aufeinander liegenden Mitnehmern 3 fluchten die übereinander liegenden Öffnungen 35 der Mitnehmer 3 miteinander.

Das vom Mitnehmerhorn 3 entfenrte Ende 34a der Auflage- und Verschiebefläche 18 ist als offenes Ende ausgestaltet, das ein Einschieben des anderen Mitnehmers 2 in Kettenrichtung 8 mit dessen Ende 34a zur Anschlagwand 26 gerichtet und um 180° gedreht erlaubt.

Wie schließlich in Fig. 4 zu erkennen ist, ist die Außenkontur des Mitnehmers 2 in einer Draufsicht senkrecht auf die Auflage- und Verschiebefläche 18 bzw. die Mittenebene 20 im Wesentlichen L-förmig, wobei ein Schenkel vom Mitnehmerhorn 3 und der andere Schenkel vom Grundkörper 4 gebildet ist.

Die der Gliederkette 7 zugewandte, in der Mittenebene 20 (vgl. Fig. 3) gelegene Innenfläche 36 des Mitnahmehoms 3 und die zur Gliederkette 7 weisende Außenfläche 37 der Stützwand 24 kommen mit dem umgriffenen Kettenglied 9 in Kontakt.

Die Fig. 5 zeigt den Mitnehmer 2 der Fig. 4 in einer Ansicht entlang des Pfeils V. Wie zu erkennen ist, sind die von der Auflage- und Verschiebefläche 18 abgewandte Unterseite 37 und der Homfuß 28 miteinander fluchtend und im Wesentlichen plan ausgebildet. Die auf der Seite der Auflage- und Verschiebefläche 18 gelegene Oberseite 39 des Homfußes 28 verläuft ebenfalls im Wesentlichen plan. Die Anschlagwand 26 und die Stütz- und Führungswand 24 weisen folglich in etwa dieselbe Höhe senkrecht zur Auflage- und Verschiebefläche 18 auf. Der Bereich zwischen dem Mitnehmerhorn 3 und dem Homfuß 28 ist an der Unterseite 38 und an der Oberseite 39 mit einem großen Krümmungsradius versehen, um einen allmählichen Übergang zwischen der geringeren Dicke des Mitnehmerhorns und der größeren Dicke des Homfußes zu schaffen.

Im Folgenden wird kurz die Montage und die Funktion der Mitnehmeranordnung 1 beschrieben.

Zur Montage werden die beiden Mitnehmer 2 zunächst einmal um die Achse K (vgl. Fig. 4) gedreht aufeinander gelegt und dann zusammen in die lichten Innenräume 5 der durch das Kettenglied 9 beabstandeten, gleich orientierten Kettenglieder 6 gesteckt. Dabei liegen die Mitnehmer 3 so aufeinander, dass das freie Ende 34a der Auflage- und Verschiebefläche 18 von der Anschlagwand 26 des anderen Mitnehmers 2 beabstandet ist. Aufgrund der Länge der Stütz- und Führungswand 24 sind die Mitnehmer 3 bereits formschlüssig gebildet. Sind die Mitnehmerhörner 3 in die Kettenglieder 6 eingeführt, werden die Mitnehmer 3 aufeinander zu verschoben, bis das freie Ende 34a der Auflage- und Verschiebefläche des einen Mitnehmers 2 an die Anschlagwand 26 der anderen Mitnehmer stößt. Dabei werden die Mitnehmer 2 durch die Stütz- und Führungswand 24a und die Führungsfläche 24b geführt, so dass eine fehlerhafte Montage ausgeschlossen ist. Wie insbesondere aus Fig. 1 in Verbindung mit Fig. 4 hervorgeht, kommt jeweils die Stütz- und Führungswand 24a des einen Mitnehmers 2 dabei zwischen der Gliederkette 9 und der Führungsfläche 24b des anderen Mitnehmers 2 zu liegen, so dass sich die Mitnehmer 2 zur Gliederkette 7 hin gegenseitig abstützen. Im zusammengeschobenen Zustand bilden die sich über die Stütz- und Führungswände 24 verschränkten Grundkörper 4 eine kompakte, im Wesentlichen quaderförmige Anordnung.

Im Betrieb wird das Spreizmoment 16 durch die Stütz- und Führungswand 24a, an die sich jeweils der Grundkörper 4 des anderen Mitnehmers abstützt, aufgenommen.

In der dargestellten Ausgestaltung kann aufgrund der einfachen, hinterschneidungsfreien Geometrie der Mitnehmer 2 insbesondere als Gusskörper ausgestaltet sein, wobei als Werkstoff härtbarer, aber nicht gehärteter Gussstahl, der lediglich einer Wärmebehandlung unterzogen ist, verwendet werden kann.

Selbstverständlich sind weitere Abänderungen der oben beschriebenen Ausgestaltung möglich. So muss die Auflage- und Verschiebefläche 18 weder plan sein, noch parallel zur Mittenebene 20 verlaufen. Auch ein gegenüber der Mittenebene 20 geneigter oder ein gekrümmter Verlauf in Kettenrichtung 8 sind möglich. Ferner können verschiedene Arten von Gliederketten 7 verwendet werden. So können auch Ketten mit anderem Querschnitt verwendet werden, wenn die Innenfläche 36 des Mitnehmerhorns 3 entsprechend angepasst wird. Ferner können die Stütz- und Verschiebewand 24 und die Anschlagwand 26 nicht nur geradlinig, sondern auch gekrümmt oder abgestuft sein. Schließlich müssen die Stütz- und Führungswand 24 und die Anschlagwand 26 nicht genau senkrecht von der Auflage- und Verschiebefläche 18 vorspringen, obwohl dies für eine Fertigung als Gussteil am einfachsten ist. Sie können auch leicht geneigt verlaufen, insbesondere einen Winkel von weniger als 90° mit der Auflage- und Verschiebefläche 18 einschließen.

## Patentansprüche

1. Mitnehmer (2) für eine in einer Kettenrichtung (8) bewegte Gliederkette (7) insbesondere eines Kettenförderers, mit einem in den lichten Innenraum (5) eines Kettengliedes (6) der Gliederkette (7) einführbar ausgestalteten Mitnehmerhorn (3) und einem sich in Kettenrichtung erstreckenden Grundkörper (4), von dem das Mitnehmerhorn (3) abgewinkelt abkragt und der wenigstens eine im Wesentlichen parallel zur Kettenrichtung (8) verlaufende Auflage- und Verschiebefläche (18) für einen weiteren Mitnehmer (2) aufweist, **dadurch gekennzeichnet, dass** die Auflage- und Verschiebefläche (18) an ihrer zur Gliederkette (7) hin gerichteten Seite (18') von einem im Wesentlichen senkrecht zur Auflage- und Verschiebefläche (18) vorspringenden Stützabschnitt (23) des Grundkörpers (4) wenigstens teilweise begrenzt ist.

2. Mitnehmer (2) nach Anspruch 1, **dadurch gekennzeichnet, dass** die Auflage- und Verschiebefläche (18) sich im Wesentlichen parallel zum Mitnehmerhorn (3) erstreckt.

3. Mitnehmer (2) nach Anspruch 1 oder 2, **dadurch gekennzeichnet, dass** der Mitnehmer (2) im Bereich der Auflage- und Verschiebefläche (18) mit einer gegenüber einem Übergangsbereich (27) zwischen Mitnehmerhorn (3) und Grundkörper (4) verringerten Wandstärke (21) ausgebildet ist.

4. Mitnehmer (2) nach einem der Ansprüche 1 bis 3, **dadurch gekennzeichnet, dass** der Stützabschnitt (23) als eine sich in Kettenrichtung (8) zum Mitnehmerhorn (3) erstreckende Stütz- und Führungswand (24a) ausgebildet ist.

5. Mitnehmer (2) nach Anspruch 4, **dadurch gekennzeichnet, dass** die in Kettenrichtung (8) gemessene Wanddicke (30) der Stütz- und Führungswand (24a) zum Mitnehmerhorn (3) hin zunimmt.

6. Mitnehmer (2) nach einem der Ansprüche 1 bis 5, **dadurch gekennzeichnet, dass** die Auflage- und Verschiebefläche (18) an ihrem mitnehmerhornseitigen Ende (34b) von einer sich im Wesentlichen senkrecht von der Auflage- und Verschiebefläche (18) weg erstreckenden, im Wesentlichen parallel zum Mitnehmerhorn (3) verlaufenden Anschlagwand (26) begrenzt ist.

7. Mitnehmer (2) nach einem der Ansprüche 1 bis 6, **dadurch gekennzeichnet, dass** im Übergangsbereich (27) von Mitnehmerhorn (3) und Grundkörper (4) die Anschlagwand (26) und die Stütz- und Führungswand (24) miteinander unter Bildung eines gegenüber dem Bereich der Auflage- und Verschiebefläche (18) verdickten Hornfußes (28) miteinander verbunden sind.

8. Mitnehmer (2) nach Anspruch 7, **dadurch gekennzeichnet, dass** am Homfuß (28) die Anschlagwand (26) und die Stütz- und Führungswand (24) unter Bildung eines zur Auflage- und Verschiebefläche (18) hin gerichteten, vom Mitnehmerhorn (3) weg sich öffnenden Winkels (29) ineinander übergehen.

9. Mitnehmer (2) nach Anspruch 8, **dadurch gekennzeichnet, dass** die Winkelprojektion (29) in der Auflage- und Verschiebefläche (18) größer als 90° ist.

10. Mitnehmer (2) nach einem der Ansprüche 1 bis 9, **dadurch gekennzeichnet, dass** die in Richtung des Mitnehmertiorns (3) verlaufende Breite (31) der Auflage- und Verschiebefläche (18) in Richtung (8) weg vom Mitnehmerhorn (3) zunächst zu und dann abnimmt.

11. Mitnehmer (2) nach einem der Ansprüche 1 bis 10, **dadurch gekennzeichnet, dass** die Wandstärke (21) im Bereich der Auflage- und Verschiebefläche (18) in etwa halb so groß ist wie die Wandstärke (22) im Bereich des Hornfußes (28).

12. Mitnehmer (2) nach einem der Ansprüche 1 bis 11, **dadurch gekennzeichnet, dass** der Mitnehmer (2) in Richtung senkrecht zur Auflage- und Verschiebefläche (18) eine im Wesentlichen L-förmige Außenkontur aufweist.

13. Mitnehmer (2) nach einem der Ansprüche 1 bis 12, **dadurch gekennzeichnet, dass** im Bereich der Auflage- und Verschiebefläche (18) wenigstens eine Öffnung (35) für ein Befestigungsmittel (12) vorgesehen ist.

14. Mitnehmeranordnung (1) für einen Kettenförderer, insbesondere zur Befestigung eines Förderorgans (11), wie einem Kratzeisen, **gekennzeichnet durch** zwei an ihren Auflage- und Verschiebeflächen (18) aufeinander liegende Mitnehmer (2) nach einem der Ansprüche 1 bis 13.

15. Mitnehmeranordnung (1) nach Anspruch 14, **dadurch gekennzeichnet, dass** die Mitnehmer (2) in Kettenrichtung (8) längsverschieblich durch einen quer zur Kettenrichtung (8) wirkenden Formschluss geführt sind.

16. Mitnehmeranordnung (1) nach Anspruch 14 oder 15, **dadurch gekennzeichnet, dass** jeweils der eine Mitnehmer (2) durch den Stützabschnitt (23) des anderen Mitnehmers (2) zur Gliederkette (7) hin an seinem vom zugehörigen Mitnehmerhorn (3) in Kettenrichtung (8) abgewandten Ende (34a) abgestützt und in Kettenrichtung (8) verschieblich geführt ist.

17. Verfahren zum Montieren einer Mitnehmeranordnung (1) aus zwei separaten Mitnehmern (2) an einer Gliederkette (7), wobei die beiden Mitnehmer (2) in zwei durch ein Kettenglied (9) voneinander beabstandete Kettenglieder (7), wenigstens ein zwischenliegendes Kettenglied (9) an seinen gebogenen Seiten umgreifend eingeführt werden, wobei die Mitnehmer (2) unter Bildung eines in Kettenrichtung (8) längs verschieblichen Formschlusses (24a, 24b) aufeinander gelegt und in Kettenrichtung (8) durch den Formschluss (24a, 24b) geführt zusammengeschoben werden.

## Claims

1. Attachment (2) for a link chain (7), in particular of a chain conveyor, moved in a chain direction (8), having an attachment flange (3) designed so it can be inserted in the interior (5) of a chain link (6) of the link chain (7), and a base body (4), extending in the chain direction, from which the attachment flange (3) is angled away and which comprises at least one contact and displacement surface (18), running substantially parallel to the chain direction (8), for an additional attachment (2), **characterised in that** at its side (18') directed toward the link chain (7) the contact and displacement surface (18) is at least partially delimited by a supporting section (23) of the base body (4) projecting substantially perpendicularly to the contact and displacement surface (18).

2. Attachment (2) according to claim 1, **characterised in that** the contact and displacement surface (18) extends substantially parallel to the attachment flange (3).

3. Attachment (2) according to claim 1 or 2, **characterised in that** in the region of the contact and displacement surface (18) the attachment (2) is designed with a wall thickness (21) which is reduced compared with a transition region (27) between attachment flange (3) and base body (4).

4. Attachment (2) according to any one of claims 1 to 3, **characterised in that** the supporting section (23) is designed as a supporting and guiding wall (24a) extending in the chain direction (8) to the attachment flange (3).

5. Attachment (2) according to claim 4, **characterised in that** measured in the chain direction (8) the wall thickness (30) of the supporting and guiding wall (24a) increases toward the attachment flange (3).

6. Attachment (2) according to any one of claims 1 to 5, **characterised in that** at its attachment flange-side end (34b) the contact and displacement surface (18) is delimited by an abutment wall (26) extending substantially perpendicularly away from the contact and displacement surface (18) and running substantially parallel to the attachment flange (3).

7. Attachment (2) according to any one of claims 1 to 6, **characterised in that** in the transition region (27) of the attachment flange (3) and the base body (4) the abutment wall (26) and the supporting and guiding wall (24) are joined together to form a flange foot (28) which is thickened with respect to the region of the contact and displacement surface (18).

8. Attachment (2) according to claim 7, **characterised in that** at the flange foot (28) the abutment wall (26) and the supporting and guiding wall (24) merge into each other to form an angle (29) directed toward the contact and displacement surface (18) and opening away from the attachment flange (3).

9. Attachment (2) according to claim 8, **characterised in that** the angle projection (29) in the contact and displacement surface (18) is greater than 90°.

10. Attachment (2) according to any one of claims 1 to 9, **characterised in that** the width (31) of the contact and displacement surface (18), which is running in the direction of the attachment flange (3), initially increases and then decreases in the direction (8) away from the attachment flange (3).

11. Attachment (2) according to any one of claims 1 to 10, **characterised in that** the wall thickness (21) in the region of the contact and displacement surface (18) is approximately half as great as the wall thickness (22) in the region of the flange foot (28).

12. Attachment (2) according to any one of claims 1 to 11, **characterised in that** in the direction perpendicular to the contact and displacement surface (18) the attachment (2) has a substantially L-shaped external contour.

13. Attachment (2) according to any one of claims 1 to 12, **characterised in that** at least one opening (35) for a fixing means (12) is provided in the region of the contact and displacement surface (18).

14. Attachment arrangement (1) for a chain conveyor, in particular for fixing a conveying element (11), such as a scraper, **characterised by** two attachments (2), resting on each other on their contact and displacement surfaces (18), according to any one of claims 1 to 13.

15. Attachment arrangement (1) according to claim 14, **characterised in that** the attachments (2) are guided in the chain direction (8) longitudinally displaceably by a positive fit acting transversely to the chain direction (8).

16. Attachment arrangement (1) according to claim 14 or 15, **characterised in that** one attachment (2) respectively is supported by the supporting section (23) of the other attachment (2) toward the link chain (7) at its end (34a) that faces away from the associated attachment flange (3) in the chain direction (8) and is displaceably guided in the chain direction (8).

17. Method for mounting an attachment arrangement (1) comprising two separate attachments (2) on a link chain (7), wherein the two attachments (2) are inserted in two chain links (7) spaced apart from each other by a chain link (9) so as to surround at least one chain link (9) located therebetween at its bent sides, wherein the attachments (2) are placed on top of each other to form a positive fit (24a, 24b) which is longitudinally displaceable in the chain direction (8), and are pushed together guided by the positive fit (24a, 24b) in the chain direction (8).

## Revendications

1. Organe d'entraînement (2) pour une chaîne à maillons (7) déplacée dans un sens de chaîne (8), en particulier un convoyeur à chaîne, avec une pointe d'entraînement (3) qui est conçue pour pouvoir être introduite dans l'espace intérieur libre (5) d'un maillon (6) de la chaîne (7), et un corps de base (4) qui s'étend dans le sens de chaîne, d'où la pointe d'entraînement (3) dépasse suivant une forme coudée et qui présente au moins une surface d'appui et de coulissement (18) globalement parallèle au sens de chaîne (8) et destinée à un autre organe d'entraînement (2), **caractérisé en ce que** la surface d'appui et de coulissement (18) est au moins en partie limitée, sur son côté (18') dirigé vers la chaîne (7), par une section de support (23) du corps de base (4) qui dépasse globalement perpendiculairement à la surface d'appui et de coulissement (18).

2. Organe d'entraînement (2) selon la revendication 1, **caractérisé en ce que** la surface d'appui et de coulissement (18) s'étend globalement parallèlement à la pointe d'entraînement (3).

3. Organe d'entraînement (2) selon la revendication 1 ou 2, **caractérisé en ce qu'**il est doté, dans la zone de la surface d'appui et de coulissement (18), d'une épaisseur de paroi (21) réduite par rapport à une zone de transition (27) entre la pointe d'entraînement (3) et le corps de base (4).

4. Organe d'entraînement (2) selon l'une des revendications 1 à 3, **caractérisé en ce que** la section de support (23) est conçue comme une paroi de support et de guidage (24a) qui s'étend dans le sens de chaîne (8) en direction de la pointe d'entraînement (3).

5. Organe d'entraînement (2) selon la revendication 4, **caractérisé en ce que** l'épaisseur de paroi (30) de la paroi de support et de guidage (24a), mesurée dans le sens de chaîne (8), va en augmentant en direction de la pointe d'entraînement (3).

6. Organe d'entraînement (2) selon l'une des revendications 1 à 5, **caractérisé en ce que** la surface d'appui et de coulissement (18) est limitée, à son extrémité côté pointe d'entraînement (34b), par une paroi de butée (26) qui s'étend à partir de la surface d'appui et de coulissement (18) globalement perpendiculairement à celle-ci et globalement parallèlement à la pointe d'entraînement (3).

7. Organe d'entraînement (2) selon l'une des revendications 1 à 6, **caractérisé en ce que** dans la zone de transition (27) de la pointe d'entraînement (3) et du corps de base (4), la paroi de butée (26) et la paroi de support et de guidage (24) sont reliées entre elles en formant une base de pointe (28) épaissie par rapport à la zone de la surface d'appui et de coulissement (18).

8. Organe d'entraînement (2) selon la revendication 7, **caractérisé en ce qu'**au niveau de la base de pointe (28), la paroi de butée (26) et la paroi de support et de guidage (24) se prolongent mutuellement en formant un angle (29) qui est dirigé vers la surface d'appui et de coulissement (18) et qui s'ouvre à l'opposé de la pointe d'entraînement (3).

9. Organe d'entraînement (2) selon la revendication 8, **caractérisé en ce que** la projection angulaire (29) dans la surface d'appui et de coulissement (18) est supérieure à 90°.

10. Organe d'entraînement (2) selon l'une des revendications 1 à 9, **caractérisé en ce que** la largeur (31), dans le sens de la pointe d'entraînement (3), de la surface d'appui et de coulissement (18) augmente tout d'abord puis diminue, en s'éloignant de la pointe d'entraînement (3) dans le sens (8).

11. Organe d'entraînement (2) selon l'une des revendications 1 à 10, **caractérisé en ce que** l'épaisseur de paroi (21) dans la zone de la surface d'appui et de coulissement (18) est à peu près deux fois moins grande que l'épaisseur de paroi (22) dans la zone de la base de pointe (28).

12. Organe d'entraînement (2) selon l'une des revendications 1 à 11, **caractérisé en ce qu'**il présente, dans un sens perpendiculaire à la surface d'appui et de coulissement (18), un contour extérieur globalement en L.

13. Organe d'entraînement (2) selon l'une des revendications 1 à 12, **caractérisé en ce qu'**il est prévu dans la zone de la surface d'appui et de coulissement (18) au moins une ouverture (35) pour un moyen de fixation (12).

14. Dispositif à organes d'entraînement (1) pour un convoyeur à chaîne, en particulier pour la fixation d'un organe de transport (11) tel qu'une raclette, **caractérisé par** deux organes d'entraînement (2) selon l'une des revendications 1 à 13 qui sont posés l'un sur l'autre au niveau de leurs surfaces d'appui et de coulissement (18).

15. Dispositif à organes d'entraînement (1) selon la revendication 14, **caractérisé en ce que** les organes d'entraînement (2) sont guidés mobiles longitudinalement dans le sens de chaîne (8) grâce à une complémentarité de forme qui agit transversalement par rapport au sens de chaîne (8).

16. Dispositif à organes d'entraînement (1) selon la revendication 14 ou 15, **caractérisé en ce qu'**à chaque fois, un organe d'entraînement (2) est supporté par la section de support (23) de l'autre organe d'entraînement (2) en direction de la chaîne à maillons (7), à son extrémité (34a) opposée, dans le sens de chaîne (8), à la pointe d'entraînement associée (3), et est guidé coulissant dans le sens de chaîne (8).

17. Procédé pour monter sur une chaîne à maillons (7) un dispositif à organes d'entraînement (1) composé de deux organes d'entraînement (2) distincts, étant précisé que les deux organes d'entraînement (2) sont introduits dans deux maillons (7) espacés l'un de l'autre par un maillon (9), en entourant au moins un maillon (9) situé entre les deux, au niveau de ses côtés courbes, et que les organes d'entraînement (2) sont posés l'un sur l'autre en formant une complémentarité de forme (24a, 24b) mobile longitudinalement dans le sens de chaîne (8), et sont rapprochés par coulissement en étant guidés dans le sens de chaîne (8) grâce à la complémentarité de forme (24a, 24b).
